**Europäisches Patentamt**

**European Patent Office**

**Office européen des brevets**

(19)

(11) Veröffentlichungsnummer: **0 114 676**
**A2**

(12) # EUROPÄISCHE PATENTANMELDUNG

(21) Anmeldenummer: **84100560.6**

(22) Anmeldetag: **19.01.84**

(51) Int. Cl.³: **G 03 B 21/58**

(30) Priorität: **20.01.83 DE 3301782**
**27.05.83 DE 3319378**

(43) Veröffentlichungstag der Anmeldung:
**01.08.84 Patentblatt 84/31**

(84) Benannte Vertragsstaaten:
**BE DE FR GB IT NL SE**

(71) Anmelder: **Meinunger, Helmut**
**Ehrenfelsstrasse 3**
**D-8000 München 70(DE)**

(72) Erfinder: **Meinunger, Helmut**
**Ehrenfelsstrasse 3**
**D-8000 München 70(DE)**

(74) Vertreter: **Schaefer, Gerhard, Dr.**
**Seitnerstrasse 13**
**D-8023 Pullach(DE)**

(54) **Anordnung zur Projektion von Filmen oder Diapositiven.**

(57) Bei einer Anordnung zur Projektion von Filmen oder Diapositiven mit einem Projektor und einer Projektionswand ist ein zusammenklappbares oder zusammensteckbares Gestänge vorgesehen, an dem die Projektionswand und der Projektor befestigbar sind. Hierbei weist das Gestänge Holme für die Aufhängung der Projektionswand, ein Auflageteil für den Projektor sowie Standbeine auf. Bei einer speziellen Ausführungsform wird der Strahlengang des Projektors mit einem Spiegel auf eine als Mattscheibe ausgebildete Projektionswand umgelenkt.

Fig. 2

EP 0 114 676 A2

0114676

## Anordnung zur Projektion von Filmen oder Diapositiven

Die Erfindung betrifft eine Anordnung zur Projektion von Filmen oder Diapositiven mit einem Projektor und einer Projektionswand.

Es ist bekannt, bei der Projektion von Filmen oder Diapositiven eine ausrollbare Projektionswand an einer Wand oder einem Stativ zu befestigen und in einigem Abstand hiervon einen Projektor auf einem vorhandenen Tisch oder einem speziellen Projektionstisch aufzustellen und auf die Projektionswand auszurichten. Da die Entfernung zwischen Projektionswand und Projektor sehr unterschiedlich sein kann, muß die Optik des letzteren einstellbar sein, um scharfe Bilder zu erhalten. Das Aufstellen von Projektionswand und Projektor ist umständlich und zeitaufwendig. Insbesondere, wenn kein spezieller Projektionstisch verwendet wird, reicht meist die Höhenverstellbarkeit des Projektors nicht aus, um diesen auf die Projektionswand auszurichten. Es müssen dann Gegenstände unterlegt werden, die eine sehr labile Anordnung bewirken.

./.

Der Erfindung liegt die Aufgabe zugrunde, diese Nachteile zu vermeiden und eine einfach aufstellbare Anordnung zur Projektion von Filmen oder Diapositiven zu schaffen. Dies wird dadurch erreicht, daß ein zusammenlegbares oder zusammensteckbares Gestänge vorgesehen ist, an dem die Projektionswand und der Projektor befestigbar sind. Hierdurch ist es möglich, durch einen Aufstellungsvorgang, wie er dem einer an einem Stativ befestigten Projektionswand entspricht, eine leicht zu handhabende, zuverlässige und optisch überzeugende Vorführung von Filmen oder Diapositiven zu ermöglichen. Von besonderem Vorteil ist dabei, daß der Projektor stets in einem festen Abstand vor der Projektionswand angeordnet ist, so daß eine einfache und auf diese Entfernung fest eingestellte Optik ausreicht.

Gemäß einer Weiterbildung der Erfindung weist das Gestänge Holme für die Befestigung der Projektionswand, ein Auflageteil für den Projektor, sowie Standbeine auf. Die gesamte Anordnung dient damit gleichzeitig als Stativ. Bei Verwendung einer aufrollbaren Projektionswand, die mit einer oberen und einer unteren Haltestange versehen und in der Regel auf eine dieser Stangen aufwickelbar ist, kann die Projektionswand mit Hilfe der Stangen an den Holmen befestigt werden. Auch an die technische Ausführung der Projektionswand werden daher keine großen Anforderungen, beispielsweise hinsichtlich des Aufrollmechanismus, gestellt.

Gemäß einer weiteren Ausbildung sind die Holme für die Projektionswand über Streben miteinander und mit dem Auflageteil verbunden, und Streben und Auflageteil sind durch Standbeine abgestützt. Vorteilhafterweise sind dabei die Holme, die Streben und die Standbeine für die Holme mittels eines Verbindungsstücks miteinander verbunden. Hierbei kann jede Verbindung ein Scharniergelenk aufweisen.

./.

Die Scharniergelenke sind dabei vorteilhafterweise in Gebrauchsstellung verrastbar. Dies kann in der Weise geschehen, daß die aufeinandergleitenden Flächen der Scharniergelenke Vorsprünge und entsprechende Ausnehmungen aufweisen, die in definierter Winkellage des Scharniers miteinander in Eingriff bringbar sind, und daß diese Flächen elastisch gegeneinandergedrückt sind.

Um die Verwendung einer besonders einfachen, am oberen und unteren Ende lediglich mit einer Haltestange versehenen aufrollbaren Projektionswand zu ermöglichen, weisen die Seitenholme an ihren oberen Enden gegen die Kraft einer Feder teleskopartig verschiebbare Auflageteile für die obere Haltestange auf, die am oberen Ende im Querschnitt vorzugsweise V- oder U-förmig ausgebildet sind. Nach Auflegen der oberen Haltestange wird die Projektionswand ausgerollt und die untere Haltestange wird in entsprechende untere Halterungen eingehängt, die im Querschnitt ebenfalls V- oder U-förmig ausgebildet sein können, und die an den Verbindungsstücken befestigt sind.

Das Auflageteil für den Projektor oder der Projektor selbst können mit formschlüssig ineinandergreifenden Teilen versehen sein. Hierdurch ist der Projektor in besonders einfacher Weise in einer definierten Lage relativ zur Projektionswand befestigbar. In einem besonders einfachen Fall ist der Projektor mit Stiften versehen, die in entsprechende Bohrungen im Auflageteil einschiebbar sind.

Die Abmessungen der erfindungsgemäßen Anordnung werden so gewählt, daß die Teile, aus denen sie aufgebaut ist, noch leicht handhabbar und das erzeugte Bild auch für mehrere Betrachter gut sichtbar ist. Dies läßt sich beispielsweise bei der vorbeschriebenen Anordnung dadurch

./.

erreichen, daß die Projektionswand eine Kantenlänge von 0,5 bis 1,5 m, vorzugsweise etwa 1 m, hat. Der Abstand des Projektors kann bei etwa 1 m bis 1,5 m liegen. Die Standbeine der Seitenholme können etwa 0,5 m bis 1 m lang sein. Ein idealer Abstand für die Betrachter kann zwischen 1,5 m und 2 m liegen. Je nach hauptsächlichem Einsatzzweck kann von den vorstehenden und nur beispielhaft angegebenen Maßen abgewichen werden.

Bei einer weiteren Ausführungsform der erfindungsgemäßen Anordnung ist ein Rahmen vorgesehen, an dessen einer Seite die Holme für die Befestigung der Projektionswand und Standbeine angelenkt sind und an der das Auflageteil für den Projektor befestigt ist und bei dem an der gegenüberliegenden Seite ein Reflexionsspiegel und mindestens ein Standbein schwenkbar befestigt sind. Diese Ausführungsform erlaubt einen noch kompakteren Aufbau und läßt sich daher in besonders einfacher Weise zusammenklappen und damit raumsparend transportieren bzw. aufbewahren. Bei dieser Ausführungsform kann die Projektionswand aus einer Mattscheibe bestehen, die aus derjenigen Richtung beobachtet wird, in der auch der Projektor steht.

Gemäß einer vorteilhaften Ausbildung ist der Reflexionsspiegel in definierter Winkellage einstellbar, vorzugsweise verrastbar, die auf die Endlage der Mattscheibe in ausgeklapptem Zustand abgestimmt ist. Der Rahmen kann aus Stabilitätsgründen einstückig ausgebildet sein. Er kann jedoch auch hier zusammenklappbar oder zusammensteckbar sein.

Weitere Einzelheiten und Vorteile der Erfindung können den in der Zeichnung dargestellten Ausführungsbeispielen entnommen werden.

Es zeigen:

Fig. 1        die Ansicht einer ersten Ausführungsform der erfindungsgemäßen Anordnung;

Fig. 2        eine Seitenansicht der in Fig. 1 dargestellten Anordung;

Fig. 3        eine Draufsicht auf die in Fig. 1 dargestellte Anordnung;

Fig. 4        eine vergrößerte Ansicht der Verbindungsteile zwischen den Holmen für die Aufhängung der Projektionswand und den Auflageteil für den Projektor in teilweise zusammengelegtem Zustand;

Fig. 5        eine Draufsicht auf den in Fig. 4 dargestellten Teil in teilweise zusammengelegtem Zustand;

Fig. 6        eine vergrößerte Ansicht eines Seitenholms für die Aufhängung der Projektionswand mit einem Verbindungsstück und einem Teil des zugehörigen Standbeins;

Fig. 7        eine vergrößerte Ansicht des oberen Teils des Standbeins der Fig. 6;

./.

Fig. 8      einen Schnitt längs der Linie VIII-VIII in
            Fig. 7;

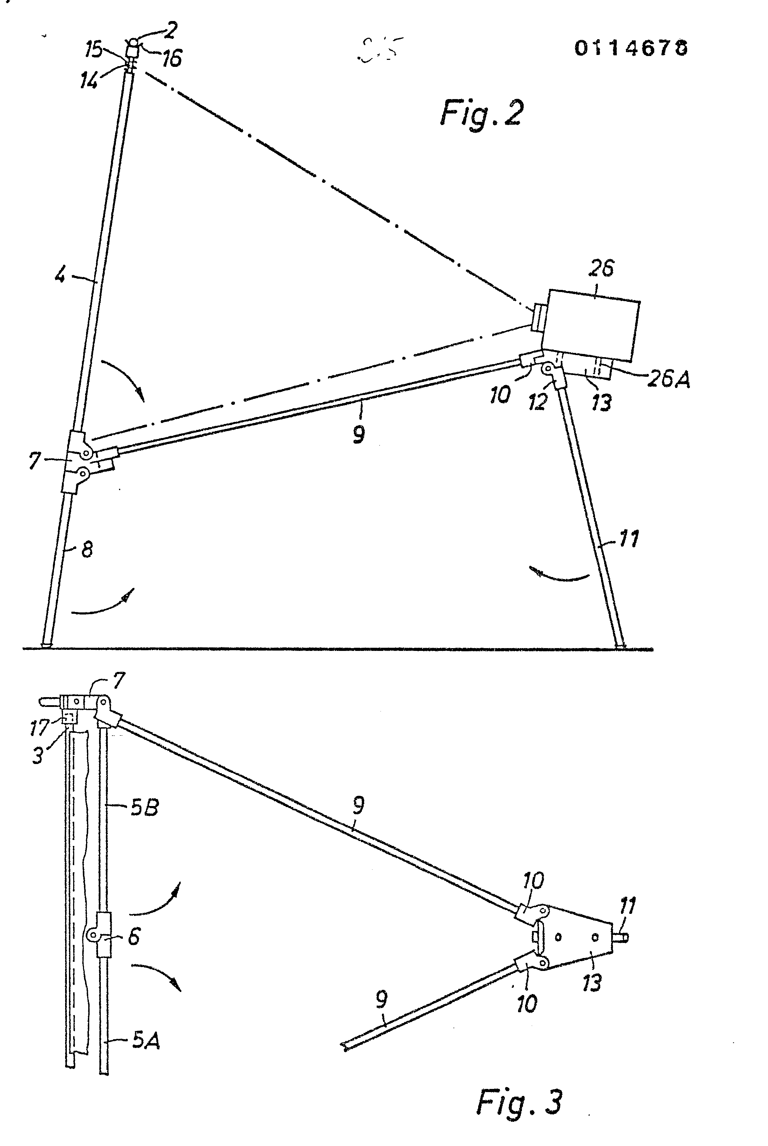

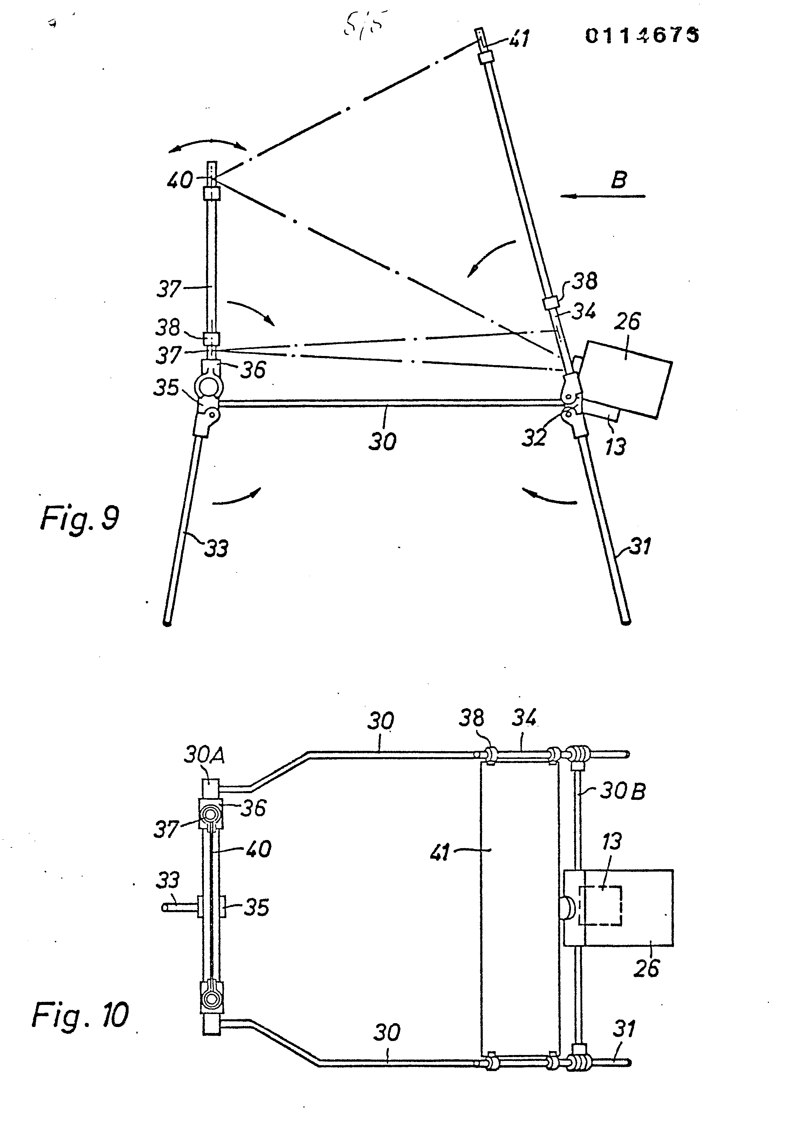

Fig. 9      eine der Fig. 2 entsprechende Seitenansicht
            einer weiteren Ausführungsform der erfindungsgemäßen Anordnung;

Fig. 10     eine Draufsicht auf die in Fig. 9 dargestellte Ausführungsform.

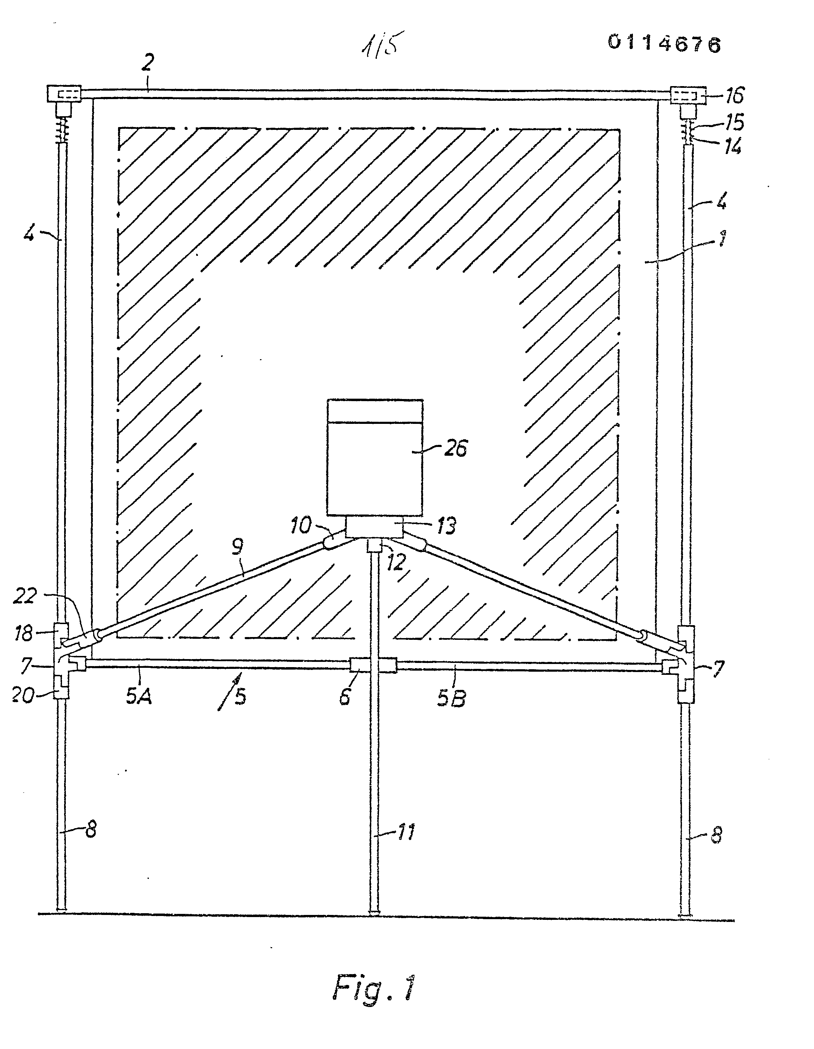

Die in den Figuren 1 bis 8 dargestellte Ausführungsform
weist eine aufrollbare Projektionswand 1 auf, die an einer
oberen Haltestange 2 sowie einer unteren Haltestange 3 befestigt ist. Die obere Haltestange 2 ist dabei in einer
noch näher zu beschreibenden Weise auf zwei Seitenholmen
4 abgestützt, die an ihrem unteren Ende durch eine Querstrebe 5 verbunden sind, welche aus den Teilstücken 5A
und 5B besteht, die über ein Scharniergelenkstück 6 miteinander verbunden sind. Die Seitenholme 4 und die untere
Querstrebe 5 sind in einem Verbindungselement 7 befestigt,
an dem außerdem ein Standbein 8 angelenkt ist. An den
Verbindungselementen 7 sind ferner Streben 9 befestigt,
die über Scharniergelenke 10 mit einem Auflageteil 13
für einen Projektor 26 verbunden sind. An der Unterseite
des Auflageteils 13 ist ein Stützbein 11 mit einem Scharnierteil 12 schwenkbar angelenkt. Die beiden Seitenholme
4 sind an ihren oberen Enden mit je einem gegen die Kraft
einer Schraubenfeder 15 teleskopartig in den Seitenholmen
4 verschiebbaren Auflageteil 14 versehen, der in einer
gabelartigen Halterung 16 endet, in die die obere Haltestange 2 der Projektionswand 1 einhängbar ist. Die untere
Haltestange 3 ist in eine gabelartige untere Halterung 17

                                            ./.

einhängbar, die am Verbindungselement 7 befestigt ist.

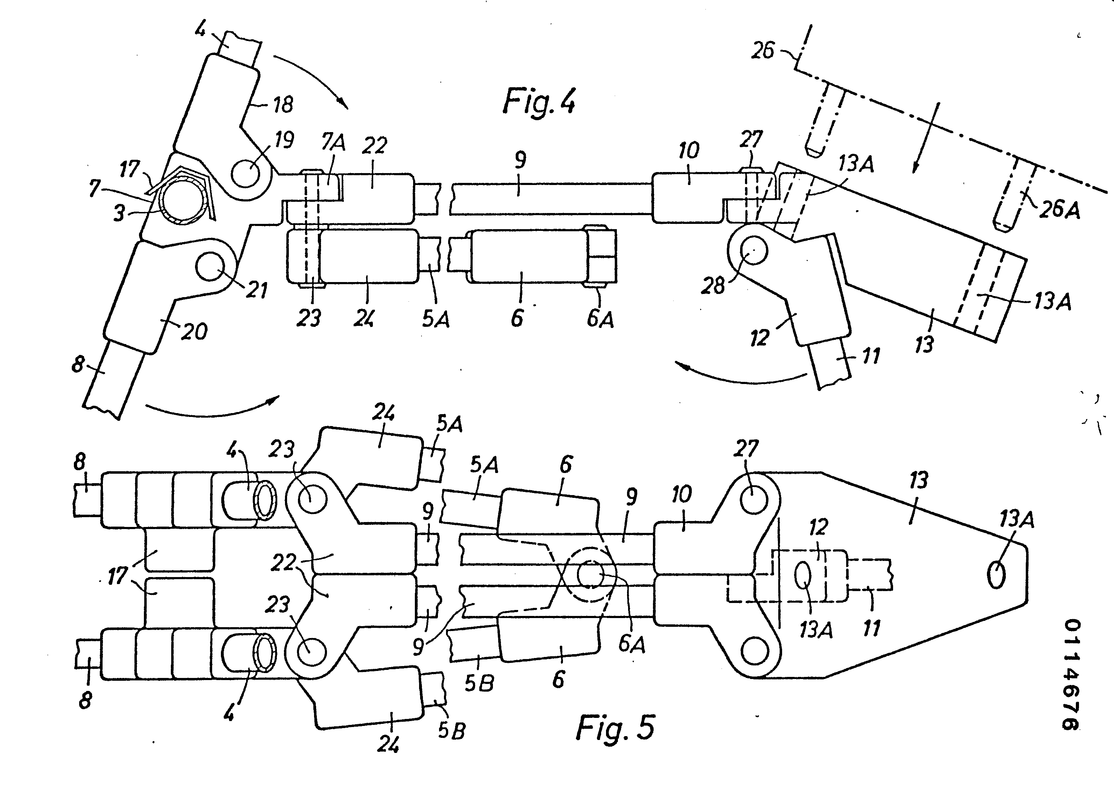

In Fig. 4 ist das Verbindungselement 7 zwischen dem Holm 4, dem Standbein 8 und der Strebe 9 vergrößert dargestellt. Wie dieser Figur zu entnehmen ist, endet der Holm 4 in einem Scharnierteil 18, das um einen Bolzen 19 am Verbindungsteil 7 schwenkbar ist. Das Fußteil 8 ist in entsprechender Weise in einem Scharnierteil 20 befestigt, welches um einen Bolzen 21 schwenkbar ist. Das Verbindungsteil 7 weist einen Ansatz 7A auf, an dem ein Scharnierteil 22, in dem die Strebe 9 befestigt ist, mittels eines Bolzens 23 schwenkbar angelenkt ist. Am selben Bolzen 23 ist auch das Scharnierteil 24 angelenkt, an dem der eine Teil 5A der Querstrebe 5 befestigt ist. Dieser endet im Scharnierteil 6, der um einen Bolzen 6A schwenkbar ist.

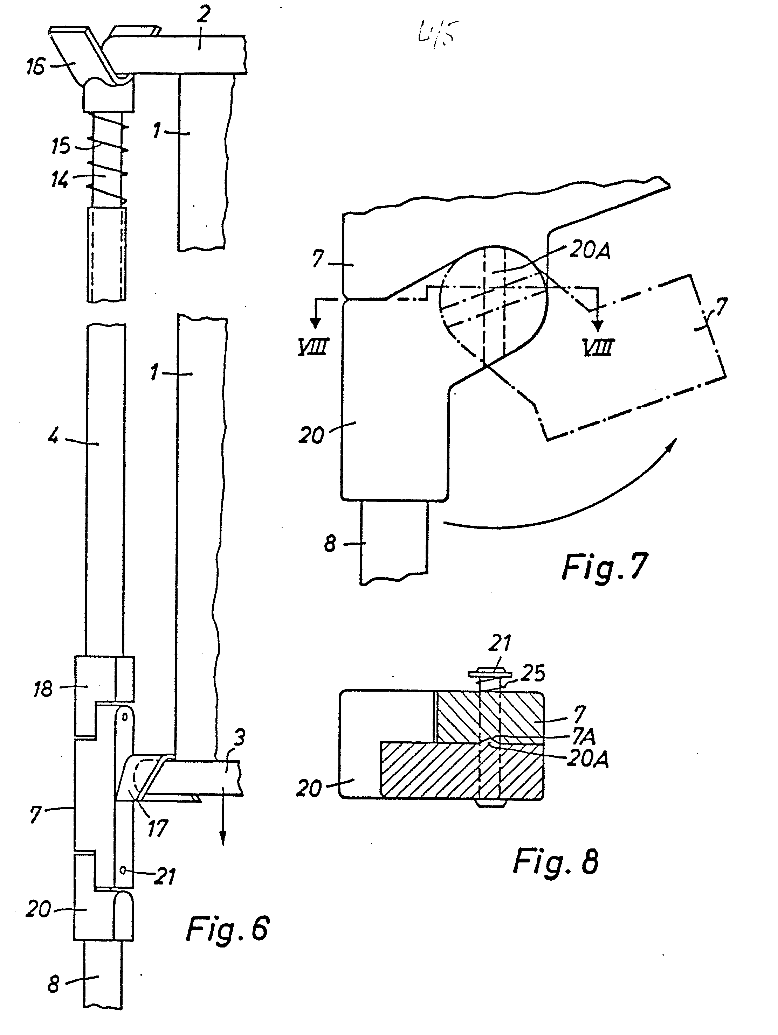

Vorteilhafterweise weisen alle Scharnierteile Verrastungsvorrichtungen auf, die in Gebrauchs- und gegebenenfalls auch in der zusammengelegten Stellung der Anordnung einrasten. Hierdurch wird erreicht, daß die Anordnung in diesen Stellungen besonders stabil ist. Eine besonders einfache und vorteilhafte Verrastungsvorrichtung wird im Zusammenhang mit dem in den Figuren 6 bis 8 dargestellten Verbindungselement 7 im Folgenden näher beschrieben. In dieser Ausführungsform weist das um die Achse 21 am Verbindungsstück 7 schwenkbare Scharnierteil 20 auf der dem Verbindungsstück 7 zugewandten Fläche eine im Querschnitt keilförmige, erhabene Rippe 20A auf. Das Verbindungsteil 7 ist mit einer entsprechenden Ausnehmung 7A versehen, mit der dieser rippenartige Vorsprung in Eingriff bringbar ist, wenn das Fußteil 8 so ausgeschwenkt ist, daß es eine Verlängerung des Holms 4 bildet. Eine Verdrehung um die Achse 21 und ein Ausrasten des Vorsprungs 20A aus der Ausnehmung 7A des Verbindungsteils 7 ist dadurch möglich, daß die Achse 21 eine Bewegung der Teile 7 und 20 in Richtung der

./.

0114676

Achse 21 zuläßt, wobei beide Teile durch eine um die Achse 21 angeordnete Druckfeder 25 gegeneinandergedrückt werden.

Die in den Figuren 1 bis 3 in Gebrauchsstellung dargestellte Anordnung läßt sich in der Weise zusammenklappen, daß zunächst die untere Haltestange 3 der Projektionswand 1 in der in Fig. 6 durch einen Pfeil dargestellten Richtung aus der unteren Halterung 17 herausgezogen und dann auf diese Haltestange 3 aufgerollt wird. Danach wird die obere Haltestange 2 aus der gabelartigen Halterung 16 am oberen Ende des Holms 4 herausgezogen.

Danach werden die Standbeine 8 um die Achsen 21 an die Holme 4 herangeklappt. Danach werden die beiden Teilstücke 5A und 5B der Querstrebe 5 um die Achse 6A des Scharnierteils 6 zusammengeklappt, bis sie aneinander anliegen. Gleichzeitig hiermit schwenken die Streben 9 um die Achsen 23 der Scharnierteile 22 und die Achsen 27 der Scharnierteile 10, bis diese Scharnierteile aneinander anliegen und die Streben 9 parallel zueinander ausgerichtet sind. Schließlich werden die Standbeine 8 um die Schwenkachsen 21, das Standbein 11 um die Schwenkachsen 28, und die Holme 4 um die Schwenkachsen 19 jeweils in der in Fig. 4 durch die Pfeile angegebenen Weise verschwenkt, bis alle Teile des Gestänges aneinander anliegen. In dieser zusammengeklappten Form kann die Anordnung auf geringem Raum aufbewahrt und in einfacher Weise transportiert werden.

Zur Aufstellung der Anordnung werden die Standbeine 8 und 11 entgegengesetzt zu der vorbeschriebenen Weise ausgeklappt, bis der Vorsprung 20A in die entsprechende Ausnehmung des Verbindungsstückes 7 rastet, wie dies in Fig. 8 dargestellt ist. Danach werden die Seitenholme 4 aufgerichtet und auseinandergezogen, bis die Teilstücke 5A und 5B der Querstrebe 5 fluchten. Danach wird die

./.

obere Haltestange 2 der Projektionswand 1 auf die oberen, gabelartigen Halterungen 16 aufgelegt und die Projektionswand 1 wird ausgerollt. Durch Ziehen in Richtung des in Fig. 6 dargestellten Pfeils werden die Auflageteile 14 gegen die Kraft der Feder 15 nach unten bewegt. Hierdurch läßt sich die untere Haltestange 3 in die untere Halterung 17 einhängen. Nach dem Loslassen ist die Projektionswand 1 gespannt. Danach wird der Projektor 26 mit den an seiner Unterseite angeordneten Stiften 26A in die Bohrungen 13A des Auflageteils 13 eingesetzt. Die Anordnung ist danach zur Vorführung von Filmen oder Diapositiven bereit.

Für den Fall, daß die ganze Anordnung nicht am Boden, sondern beispielsweise auf einem Tisch aufgestellt werden soll, können die Standbeine 8 und 11 bei ansonsten in Gebrauchsstellung gebrachten Holmen und Streben des Gestänges in angeklappter Stellung bleiben.

In einem praktischen Ausführungsbeispiel ist die Projektionswand 1 quadratisch und hat eine Seitenlänge von 1000 mm. Der Abstand des Objektivs des Projektors 26 von der Projektionswand 1 beträgt ebenfalls etwa 1000 mm. Die ausklappbaren Fußteile 8, mit denen die Seitenholme 4 abgestützt sind, sind etwa 500 mm lang. Bei einem Objektiv mit Brennweite 40 mm und Bildwinkel 46$^{\circ}$ kommt dann in Augenhöhe des sitzenden Betrachters ein Bild von etwa 900 mm Kantenlänge zustande.

In den Figuren 9 und 10 ist ein weiteres Ausführungsbeispiel der erfindungsgemäßen Anordnung dargestellt. Es weicht von dem zunächst beschriebenen Ausführungsbeispiel im wesentlichen dadurch ab, daß ein Spiegel 40 zur Umlenkung des Strahlenganges vorgesehen ist, und daß die Projektionswand 1 nicht eine aufrollbare Leinwand, sondern eine Mattscheibe 41 ist.

./.

Im einzelnen ist diese zweite Ausführungsform wie folgt aufgebaut: Das Gestänge der erfindungsgemäßen Anordnung weist hier einen geschlossenen Rahmen 30 auf, der einstückig ausgebildet oder zusammensteckbar bzw. zusammenklappbar sein kann. An den beiden Enden der Strebe 30B des Rahmens 30 ist an der Unterseite eines Verbindungsteils 32 je ein Standbein 31 schwenkbar angelenkt. An der Oberseite desselben Verbindungsteils 32 ist je ein Holm 34 schwenkbar angelenkt. In der Mitte der gegenüberliegenden Strebe 30A des Rahmens 30 ist an einem Verbindungsteil 35 ein weiteres Standbein 33 schwenkbar angelenkt. An den Holmen 34 ist mittels Halterungen 38 eine als Projektionswand dienende Mattscheibe 41 befestigt. Auf der unter dieser Mattscheibe 41 und parallel zu dieser verlaufenden Strebe 30B des Gestänges 30 ist das Auflageteil 13 für den Projektor 26 befestigt.

An den Enden des dem Auflageteil 13 gegenüberliegenden Verbindungsteils 30A des Rahmens 30, der vorzugsweise rohrförmig ausgebildet ist, ist je eine um dieses Verbindungsteil 30A schwenkbare Halteklammer 36 angeordnet, auf der eine Strebe 37 befestigt ist. An dieser Strebe 37 sind Halterungen 38 für einen Spiegel 40 befestigt. Dieser Spiegel kann entweder stufenlos in seiner Winkellage eingestellt werden oder er ist mit einer Verrastungsvorrichtung versehen, die ihn automatisch in der Lage feststellt, die die korrekte Projektion des vom Projektor 26 erzeugten Bildes auf der ausgeklappten Mattscheibe 41 ergibt.

Diese Ausführungsform läßt einen noch kompakteren Aufbau der erfindungsgemäßen Anordnung zu, als den zunächst beschriebenen. Die vom Projektor 26 projizierten Bilder werden dabei vom Spiegel 40 auf die Mattscheibe 41 geworfen und können vom Betrachter in Richtung des Pfeils B von

./.

derjenigen Seite her betrachtet werden, an der der Projektor 26 angeordnet ist. Der Abstand zwischen dem Objektiv des Projektors 26 und dem Spiegel 40 und damit auch der Abstand zwischen dem Spiegel 40 und der Mattscheibe 41 beträgt bei einem Ausführungsbeispiel etwa 800 mm. Die Abmessungen des Spiegels 40 liegen dabei in der Größenordnung von 500 x 500 mm, die der Mattscheibe 41 bei etwa 750 x 750 mm.

Diese Ausführungsform läßt sich aus der in Fig. 9 dargestellten Stellung in besonders einfacher Weise zusammenklappen und damit raumsparend transportieren bzw. aufbewahren. Hierzu wird zunächst der Spiegel 40 in der durch einen Pfeil angezeigten Richtung in die Ebene des Rahmens 30 geklappt. Dasselbe gilt für die Holme 34 mit der Mattscheibe 41. Schließlich werden die Standbeine 31 und 33 ebenfalls in Pfeilrichtung in diese Ebene geklappt.

Auch bei dieser zweiten Ausführungsform können die im Zusammenhang mit der in den Figuren 1 bis 8 dargestellten ersten Ausführungsform beschriebenen konstruktiven Details mit Erfolg eingesetzt werden. Dies gilt insbesondere für die Gelenk- und Verrastungsmechanismen der Holme, Beine und gegebenenfalls der Gestänge.

## Patentansprüche

1. Anordnung zur Projektion von Filmen oder Diapositiven mit einem Projektor und einer Projektionswand, dadurch gekennzeichnet, daß ein zusammenklappbares oder zusammensteckbares Gestänge (4 bis 13; 30 bis 37) vorgesehen ist, an dem die Projektionswand (1; 41) und der Projektor (26) befestigt sind.

2. Anordnung nach Anspruch 1, dadurch gekennzeichnet, daß das Gestänge Holme (4; 34) für die Befestigung der Projektionswand (1; 41), ein Auflageteil (13) für den Projektor (26) sowie Standbeine (8,11; 31,33) aufweist

3. Anordnung nach Anspruch 1 oder 2, dadurch gekennzeichnet, daß die Holme (4; 34) für die Projektionswand (1; 41) über Streben (5,9; 30) miteinander und mit dem Auflageteil (13) verbunden sind, und daß die Holme (4; 34) und das Auflageteil (13) durch Standbeine (8,11; 31,33) abgestützt sind.

4. Anordnung nach Anspruch 3, dadurch gekennzeichnet, daß die Holme (4; 34), die Streben (5,9; 30) und die Standbeine (8; 31) für die Holme (4, 34) mittels eines Verbindungsstücks (7; 32) miteinander verbunden sind.

5. Anordnung nach Anspruch 4, dadurch gekennzeichnet, daß das Verbindungsteil (7; 32) für jede Verbindung ein Scharniergelenk aufweist.

6. Anordnung nach Anspruch 5, dadurch gekennzeichnet, daß die Scharniergelenke in Gebrauchsstellung verrastbar sind.

7. Anordnung nach Anspruch 6, dadurch gekennzeichnet, daß die aufeinandergleitenden Flächen der Scharniergelenke Vorsprünge (20A) und entsprechende Ausnehmungen (7A) aufweisen, die in definierter Winkellage des Scharniers miteinander in Eingriff bringbar sind, und daß diese Flächen elastisch (25) gegeneinandergedrückt sind.

8. Anordnung nach einem der vorhergehenden Ansprüche, dadurch gekennzeichnet, daß die Projektionswand (1) aufrollbar ist.

9. Anordnung nach einem der vorhergehenden Ansprüche, dadurch gekennzeichnet, daß die Seitenholme (4) an ihren oberen Enden gegen die Kraft einer Feder (15) teleskopartig verschiebbare Auflageteile (14) für die obere Haltestange (2) der Projektionswand (1) aufweisen.

10. Anordnung nach Anspruch 9, dadurch gekennzeichnet, daß die Verbindungsstücke (7) Halterungen (17) für die untere Haltestange (3) der Projektionswand (1) aufweisen.

11. Anordnung nach einem der Ansprüche 1 bis 7, dadurch gekennzeichnet, daß ein Rahmen (30) vorgesehen ist, an dessen einer Seite die Holme (34) für die Befestigung der Projektionswand (41) und Standbeine (31) angelenkt sind, und an der das Auflageteil (13) für den Projektor

.∕.

- 3 -                0114676

(26) befestigt ist, und daß an der gegenüberliegenden
Seite ein Reflexionsspiegel (40) und mindestens ein
Standbein (33) schwenkbar befestigt sind.

12. Anordnung nach Anspruch 11, dadurch gekennzeichnet, daß
der Reflexionsspiegel (4) in definierter Winkellage einstellbar, vorzugsweise verrastbar, ist.

13. Anordnung nach Anspruch 11 oder 12, dadurch gekennzeichnet, daß die Projektionswand (41) aus einer Mattscheibe
besteht.

14. Anordnung nach einem der vorhergehenden Ansprüche, dadurch gekennzeichnet, daß das Auflageteil (13) oder der
Projektor (26) mit formschlüssig ineinandergreifenden
Teilen (13A, 26A) versehen sind.

./.

Fig. 1

*Fig.2*

*Fig.3*

0114676

Fig. 4

Fig. 5

Fig.6

Fig.7

Fig. 8

Fig. 9

Fig. 10

5/5

0114676